# EUROPEAN PATENT APPLICATION

(11) **EP 4 836 561 A1**
(43) Date of publication of application: **04.11.2026**
(21) Application number: 24923501.1
(22) Date of filing: 05.12.2024
(51) Int. Cl.: H04W 72/0453, H04L 27/00

(54) **COMMUNICATION METHOD, ELECTRONIC DEVICE, STORAGE MEDIUM AND COMPUTER PROGRAM PRODUCT**

(30) Priority: 05.02.2024 CN 202410166242
(71) Applicant: ZTE Corporation, Shenzhen, Guangdong 518057 (CN)
(72) Inventor: XING, Weimin, Shenzhen, Guangdong 518057 (CN); HU, Yuzhou, Shenzhen, Guangdong 518057 (CN); BI, Feng, Shenzhen, Guangdong 518057 (CN); LU, Youxiong, Shenzhen, Guangdong 518057 (CN)
(74) Representative: Savi, Massimiliano
(86) International application number: PCT/CN2024/137203
(87) International publication number: WO 2025/167299

(57) **Abstract**

The present application relates to, but is not limited to, the technical field of communication. Provided are a communication method, an electronic device, a storage medium and a computer program product. The communication method comprises: first, sending a first forward link (FL) signal at a first frequency; next, sending a second FL signal at a second frequency; and then, on the basis of a reverse link (RL) frequency, receiving an RL signal sent by a second node, wherein the first FL signal carries frequency indication information, and the RL frequency is determined on the basis of at least one of the frequency indication information and the second frequency.

## Description

### CROSS-REFERENCE TO RELATED APPLICATION

This application is based on and claims priority to Chinese Patent Application No. 202410166242.1, filed on February 5, 2024, the entire contents of which are hereby incorporated by reference into the present application.

### TECHNICAL FIELD

The present application relates to the field of communication technology, and in particular, to a communication method, an electronic device, a storage medium, and a computer program product.

### BACKGROUND

With the continuous advancement of radio technology, various radio services have emerged in large numbers. A basic network or cell of traditional wireless communication generally includes one central node and a plurality of terminal nodes, for example, communication between a base station and a plurality of User Equipments (UEs) in a cellular network, such as 4G, 5G, and 6G communications; communication between an Access Point (AP) and Stations (STAs) in a wireless local area network; and communication between a G-node (management node) and T-nodes (terminal nodes) in new short-range communication. In the above-mentioned wireless communications, communication from the central node to the terminal node is generally referred to as downlink (DL), while communication from the UE to the base station, from the STA to the AP, and from the T-node to the G-node is referred to as uplink (UL). If DL and UL use different spectra or frequency bands for duplex communication, this is referred to as Frequency Division Duplex (FDD), for example, using a pair of spectra for FDD communication. If DL and UL use different times of the same spectrum for communication, this is generally referred to as Time Division Duplex (TDD). Full duplex using different subbands on a TDD spectrum also belongs to a type of FDD and is also called FDD. The subbands include a Downlink subband (DL subband) and an Uplink subband (UL subband). For FDD, it includes at least one downlink spectrum (DL band) for DL communication, and at least one uplink spectrum (UL band) for UL communication.

However, the devices participating in the above-mentioned communications generally have relatively high energy consumption. Even terminal nodes require power supplies or batteries for energy, resulting in high manufacturing and maintenance costs. On the other hand, some large-scale commercial scenario use cases (such as warehousing, logistics, supply chain, smart home, environmental monitoring, smart agriculture and animal husbandry, and item finding) require small-sized, low-cost, and maintenance-free Internet of Things (IoT) devices. These devices do not need to rely on battery power, but instead obtain energy from the surrounding environment, thereby achieving a longer device service life. Such IoT devices that do not rely on battery power are generally referred to as Ambient Internet of Things (A-IoT) or Passive Internet of Things (P-IoT). Therefore, how to solve the problem of determining the communication frequency of devices in ambient IoT communication scenarios is a major problem currently faced by the industry.

### SUMMARY

Embodiments of the present application provide a communication method, an electronic device, a storage medium, and a computer program product, which aim to solve the problem of determining the communication frequency of devices in ambient IoT communication scenarios, thereby implementing duplex communication.

In accordance with a first aspect of the present application, some embodiments provide a communication method, applied to a first node, wherein the method includes:
transmitting a first forward link (FL) signal at a first frequency;
transmitting a second FL signal at a second frequency;
receiving, based on a return link (RL) frequency, an RL signal transmitted by a second node;
where the first FL signal carries frequency indication information, and the RL frequency is determined according to the frequency indication information and the second frequency.

In accordance with a second aspect of the present application, some embodiments provide a communication method, applied to a second node, wherein the method includes:
receiving a first forward link (FL) signal transmitted at a first frequency, wherein the first FL signal carries frequency indication information;
receiving a second FL signal transmitted at a second frequency;
determining a return link (RL) frequency according to the frequency indication information and the second frequency;
transmitting an RL signal at the RL frequency.

In accordance with a third aspect of the present application, some embodiments provide an electronic device, including:
one or more processors;
a memory storing one or more programs, wherein when the one or more programs are executed by the one or more processors, the one or more processors are caused to implement the communication method according to the first aspect above; or the communication method according to the second aspect above.

In accordance with a fourth aspect of the present application, some embodiments provide a computer-readable storage medium storing a computer program, which when executed by a processor, causes the processor to carry out: the communication method according to the first aspect above; or the communication method according to the second aspect above.

In accordance with a fifth aspect of the present application, some embodiments provide a computer program product, including a computer program, which when executed by a processor, causes the processor to carry out: the communication method according to the first aspect above; or the communication method according to the second aspect above.

With the communication method, the electronic device, the storage medium, and the computer program product provided by the embodiments of the present application, first, a first forward link (FL) signal is transmitted at a first frequency; next, a second FL signal is transmitted at a second frequency; then, an RL signal transmitted by a second node is received based on a return link (RL) frequency; wherein the first FL signal carries frequency indication information, and the RL frequency is determined according to the frequency indication information and the second frequency. The present application addresses the problem of determining the communication frequency of devices in ambient IoT communication scenarios by obtaining the RL frequency according to at least one of the frequency indication information carried by the first FL signal and the second frequency, and receiving the RL signal transmitted by the second node based on the RL frequency, thereby implementing duplex communication.

### BRIEF DESCRIPTION OF DRAWINGS

The accompanying drawings are provided for further understanding of the technical solutions of the present application, and constitute a part of the specification. Together with the embodiments of the present application, they are used to explain the technical solutions of the present application, and do not constitute a limitation on the technical solutions of the present application.
FIG. 1 is a schematic flowchart of a communication method provided by an embodiment of the present application;
FIG. 2 is a schematic flowchart of a communication method provided by another embodiment of the present application;
FIG. 3 is a schematic diagram of frequencies used in A-IoT communication provided by an embodiment of the present application;
FIG. 4 is a schematic diagram of frequencies used in A-IoT communication provided by another embodiment of the present application;
FIG. 5 is a schematic diagram of frequencies used in A-IoT communication provided by another embodiment of the present application;
FIG. 6 is a schematic diagram of frequencies used in A-IoT communication provided by another embodiment of the present application;
FIG. 7 is a schematic diagram of frequencies used in A-IoT communication provided by another embodiment of the present application;
FIG. 8 is a schematic device structural diagram of an electronic device provided by an embodiment of the present application.

### DETAILED DESCRIPTION

In order to make the objectives, technical solutions, and advantages of the present application more clear, the present application will be described in further detail below with reference to the drawings and embodiments. It should be understood that the specific embodiments described herein are only used to explain the present application, and are not used to limit the present application.

It should be understood that in the description of the embodiments of the present application, if terms such as "first" and "second" are described, they are only used for the purpose of distinguishing technical features, and should not be understood as indicating or implying relative importance, or implicitly indicating the number of the indicated technical features, or implicitly indicating the sequential relationship of the indicated technical features. "At least one" refers to one or more, and "a plurality of" refers to two or more. "And/or" describes an association relationship of associated objects, indicating that three relationships may exist. For example, A and/or B may indicate: A existing alone, A and B existing simultaneously, or B existing alone. A and B may be singular or plural. The character "/" generally indicates that the preceding and following associated objects are in an "or" relationship. "At least one of the following" and similar expressions refer to any combination of these items, including any combination of a single item or a plurality of items. For example, at least one of a, b, and c may represent: a, b, c, a and b, a and c, b and c, or a and b and c, wherein a, b, and c may be single or a plurality of.

In addition, the technical features involved in the various embodiments of the present application described below may be combined with each other as long as they do not conflict with each other.

In order to facilitate understanding of the solutions of the embodiments of the present application, and to make the description of the following embodiments clear and concise, a brief introduction to the related technology is first provided:
With the continuous advancement of radio technology, various radio services have emerged in large numbers. A basic network or cell of traditional wireless communication generally includes one central node and a plurality of terminal nodes, for example, communication between a base station and a plurality of User Equipments (UEs) in a cellular network, such as 4G, 5G, and 6G communications; communication between an Access Point (AP) and Stations (STAs) in a wireless local area network; and communication between a G-node (management node) and T-nodes (terminal nodes) in new short-range communication. In the above-mentioned wireless communications, communication from the central node to the terminal node is generally referred to as downlink (DL), while communication from the UE to the base station, from the STA to the AP, and from the T-node to the G-node is referred to as uplink (UL). If DL and UL use different spectra or frequency bands for duplex communication, this is referred to as Frequency Division Duplex (FDD), for example, using a pair of spectra for FDD communication. If DL and UL use different times of the same spectrum for communication, this is generally referred to as Time Division Duplex (TDD). Full duplex using different subbands on a TDD spectrum also belongs to a type of FDD and is also called FDD. For FDD, it includes at least one DL spectrum for DL communication, and at least one UL spectrum for UL communication.

However, the devices participating in the above-mentioned communications generally have relatively high energy consumption. Even terminal nodes require power supplies or batteries for energy, resulting in high manufacturing and maintenance costs. On the other hand, some large-scale commercial scenario use cases (such as warehousing, logistics, supply chain, smart home, environmental monitoring, smart agriculture and animal husbandry, and item finding) require small-sized, low-cost, and maintenance-free Internet of Things (IoT) devices. These devices do not need to rely on battery power, but instead obtain energy from the surrounding environment, thereby achieving a longer device service life. Such IoT devices that do not rely on battery power are generally referred to as Ambient Internet of Things (A-IoT) or Passive Internet of Things (P-IoT). Therefore, how to solve the problem of determining the communication frequency of devices in ambient IoT communication scenarios is a major problem currently faced by the industry.

From the perspective of A-IoT wireless communication (point-to-point communication from one device to another), the devices participating in A-IoT communication may include:
An A-IoT master node: capable of identifying and reading/writing secondary nodes through communication, and also referred to as a Reader, a read/write device, or an interrogator in related technologies. The master node may be a central node in a traditional network, such as a base station, an AP, a G-node, a relay, or an intermediate node, or may be a terminal node in a traditional network, such as a UE, a STA, or a T-node.

An A-IoT secondary node: a low-cost IoT device that generally has no battery and can respond to the communication of the master node. Generally, A-IoT devices in a narrow sense refer to secondary nodes, Tags, and the like.

From the perspective of an A-IoT system, in addition to the above-mentioned master node and secondary node, the system may further include:
network-side devices, including devices for configuring and managing communication, backend databases, servers, and other higher-layer network entities;
dedicated power supply devices, for example, the power supply of an A-IoT Tag may come from the surrounding environment, such as light energy or radio frequency energy, and dedicated power supply devices may also be used to provide such energy to the Tag.

For ease of description, the following embodiments of the present application will take a Reader and a Tag as examples to describe the communication between the master node and the secondary node in A-IoT. The communication from the Reader to the Tag may be referred to as forward link (FL), and the communication from the Tag to the Reader is referred to as return/reverse link (RL).

A-IoT communication may use the spectrum of traditional communication. In addition to having A-IoT communication capabilities, the Reader also has traditional communication capabilities. The Tag, unlike traditional devices, needs to take into account the frequencies used by the FL and RL described above, and while satisfying A-IoT communication, also needs to consider traditional DL and UL communication in order to avoid mutual interference.

Illustratively, a traditional Reader and Tag generally operate on the same spectrum, i.e., in a TDD-like operation mode. For example, the 920 MHz to 925 MHz frequency band may be used for radio frequency identification communication. The Reader may transmit an FL modulated signal to the Tag at one instant in this frequency band, and use the same frequency band at a different instant to transmit a CW signal, and simultaneously receive the RL frequency transmitted by the Tag in this frequency band. However, for traditional communication systems, some frequency bands are required by regulations to conduct FDD communication. Moreover, both the central node and the terminal node of traditional communication may serve as a Reader. When a traditional base station operates on an FDD spectrum, it only transmits on the DL spectrum and only receives on the UL spectrum, while the UE transmits on the UL spectrum and receives on the DL spectrum. Generally, the frequency used by the Tag for transmission is around the frequency of the CW signal, i.e., around the second frequency.

If the TDD non-paired spectrum operation mode is applied to the FDD spectrum, i.e., only one of the paired spectra is used (hereinafter referred to as Mode 1), it may violate the usage rules of the FDD frequency band, and the following problems also exist:
If only the DL spectrum of FDD is used, the base station or the terminal needs to implement full duplex or subband full duplex on the DL spectrum, which imposes high requirements on the device. For example, when the base station transmits DL on the DL spectrum, it also needs to receive the RL frequency on the DL spectrum simultaneously, and the self-interference of simultaneous transmission and reception will be very severe, requiring the base station to perform complex self-interference cancellation. For a UE acting as a Reader, its capability is generally lower than that of the base station, and it is difficult to implement DL reception on the DL spectrum while simultaneously transmitting an FL modulated signal.

If only the UL spectrum of FDD is used, the base station or the terminal also has the above-mentioned full duplex self-interference problem. For a UE-type Reader, the transmission of the UL signal and the reception of the RL frequency may be separated in time in a time-division manner to avoid the above-mentioned self-interference, i.e., the UE is not expected to be scheduled to perform UL transmission and A-IoT communication simultaneously, where the A-IoT communication includes at least one of the following: transmission of CW, reception of the RL frequency, and transmission of an FL modulated signal. Alternatively, if the UE is scheduled to perform UL transmission and A-IoT communication simultaneously, the UE needs to perform only one of the operations according to a priority rule.

For the FDD spectrum, all FL signals are transmitted on one spectrum, and the RL signal is transmitted on the corresponding other spectrum (hereinafter referred to as Mode 2). For example, when the base station acts as the Reader, both the FL modulated signal and the CW are transmitted on the DL spectrum, and the RL signal is transmitted on the UL spectrum. When the UE acts as the Reader, both the FL modulated signal and the CW are transmitted on the UL spectrum, and the RL signal is transmitted on the DL spectrum. Although this manner does not have the above-mentioned full duplex self-interference problem when operating in FDD mode, it requires the Tag to receive the CW signal on one spectrum and shift the return signal to another corresponding spectrum, requiring a shift of more than 10 MHz across spectra, which imposes higher requirements on the Tag. The return frequency of a traditional Tag is generally around the second frequency used by the CW. On the other hand, Tag modulation is generally double sideband, i.e., the shift is also to both sides, and only one side will fall in the corresponding spectrum, while the other sideband will cause interference to other devices. To avoid such interference, additional processing needs to be added to the Tag, further increasing the complexity of the Tag.

However, Mode 1 imposes higher requirements on the Reader device, while Mode 2 imposes higher requirements on the Tag.

Based on this, embodiments of the present application provide a communication method, an electronic device, a storage medium, and a computer program product, which aim to solve the problem of determining the communication frequency of devices in ambient IoT communication scenarios, thereby implementing duplex communication.

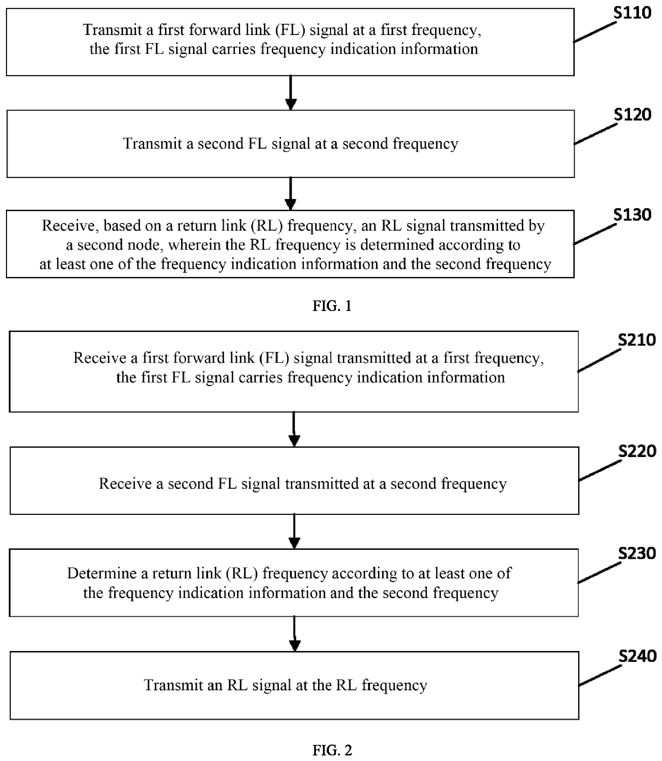

Referring to FIG. 1, FIG. 1 is a schematic flowchart of a communication method provided by an embodiment of the present application. The communication method is applied to a first node. As shown in FIG. 1, the communication method may include, but is not limited to, the following steps S110 to S130.

In step S110, a first forward link (FL) signal is transmitted at a first frequency, wherein the first FL signal carries frequency indication information.

In step S120, a second FL signal is transmitted at a second frequency.

In step S130, an RL signal transmitted by a second node is received based on a return link (RL) frequency, wherein the RL frequency is determined according to at least one of the frequency indication information and the second frequency.

It should be noted that the first node described in the embodiments of the present application represents the master node in A-IoT, and the second node represents the secondary node in A-IoT. The master node first transmits the first FL signal carrying the frequency indication information at the first frequency, and then transmits the second FL signal at the second frequency; the second node receives the first FL signal and the second FL signal transmitted by the master node, then determines the RL frequency according to the frequency indication information and/or the second frequency, and transmits the RL signal to the first node at the RL frequency. In this way, signal interference between different nodes can be avoided, ensuring the stability and reliability of communication. In addition, by using different frequencies for signal transmission, energy consumption during signal transmission can be reduced. Furthermore, the nodes can implement efficient communication through simple logical determination and frequency switching, thereby helping to reduce the complexity and cost of the system and improve the maintainability and reliability of the device.

In some examples, the first node is a base station, and the second node is a user equipment. The base station transmits the first FL signal carrying the frequency indication information at the first frequency, and then transmits the second FL signal at the second frequency. Then, the user equipment receives the first FL signal and the second FL signal transmitted by the base station, subsequently determines the RL frequency according to the frequency indication information and/or the second frequency, and transmits the RL signal to the base station at the RL frequency.

In some examples, the first node is an AP, and the second node is a STA. The AP transmits the first FL signal carrying the frequency indication information at the first frequency, and then transmits the second FL signal at the second frequency. Then, the STA receives the first FL signal and the second FL signal transmitted by the AP, subsequently determines the RL frequency according to the frequency indication information and/or the second frequency, and transmits the RL signal to the AP at the RL frequency.

In some examples, the first node is a G-node, and the second node is a T-node. The G-node transmits the first FL signal carrying the frequency indication information at the first frequency, and then transmits the second FL signal at the second frequency. Then, the T-node receives the first FL signal and the second FL signal transmitted by the G-node, subsequently determines the RL frequency according to the frequency indication information and/or the second frequency, and transmits the RL signal to the G-node at the RL frequency.

In some other embodiments, the first node is a user equipment and the second node is a base station; or the first node is a STA and the second node is an AP; or the first node is a T-node and the second node is a G-node. The embodiments of the present application do not impose excessive limitations on the specific types of the first node and the second node.

The present application addresses the problem of determining the communication frequency of devices in ambient IoT communication scenarios by obtaining the RL frequency according to at least one of the frequency indication information carried by the first FL signal and the second frequency, and receiving the RL signal transmitted by the second node based on the RL frequency, thereby implementing duplex communication.

It can be understood that the RL frequency of the present application may be determined according to the frequency indication information, may be determined according to the second frequency, or may be determined according to the frequency indication information and the second frequency. The embodiments of the present application do not specifically limit this.

It should be noted that the RL frequency of the present application includes a third frequency, and the frequency indication information is configured to be used for determining the third frequency.

It can be understood that since the first FL signal of the present application carries the frequency indication information, and the frequency indication information is configured to be used for determining the third frequency, the third frequency can be determined through the first FL signal.

Illustratively, the second node may determine the third frequency according to the frequency indication information carried by the first FL signal, and then transmit the RL signal to the first node at the third frequency.

It should be noted that the RL frequency of the present application includes a fourth frequency, and the fourth frequency is obtained by offsetting the second frequency by the third frequency.

It can be understood that after the third frequency is determined according to the frequency indication information carried by the first FL signal in the present application, the fourth frequency is obtained by offsetting the second frequency by the third frequency.

For example, the second node determines the third frequency according to the frequency indication information carried by the first FL signal, determines the second frequency according to the second FL signal, and then adds the second frequency and the third frequency to obtain the fourth frequency.

For another example, the second node determines the third frequency according to the frequency indication information carried by the first FL signal, determines the second frequency according to the second FL signal, and then subtracts the third frequency from the second frequency to obtain the fourth frequency.

It should be noted that the frequency indication information includes one of the following:
a value of the third frequency; or an index of the third frequency.

It can be understood that, since the frequency indication information of the present application includes the value of the third frequency or the index of the third frequency.

For example, the frequency indication information carried by the first FL signal directly indicates that the value of the third frequency is 60 KHz. Then, the second node can directly determine that the third frequency is 60 KHz according to the frequency indication information carried by the first FL signal.

For another example, the frequency indication information carried by the first FL signal directly indicates that the index of the third frequency is 1. Then, the second node can determine that the index of the third frequency is 1 according to the frequency indication information carried by the first FL signal, and further look up the corresponding value of the third frequency according to index 1. Assuming that the third frequency corresponding to index 1 is 60 KHz, the third frequency is thus determined to be 60 KHz.

It should be noted that the RL frequency may be equal to the second frequency, that is, after the second node determines the second frequency according to the second FL signal, the second node transmits the RL signal to the first node at the second frequency.

It should be noted that the basic time-domain period of the RL signal of the present application is the reciprocal of the RL frequency. Specifically, it may be the reciprocal of the third frequency, the reciprocal of the second frequency, or the reciprocal of the fourth frequency. The present application does not specifically limit the basic time-domain period of the RL signal.

In addition, it should be noted that the frequency indication information includes one of the following:
a scale factor of the third frequency relative to a fifth frequency; or an offset factor of the third frequency relative to the fifth frequency.

It can be understood that the scale factor and the offset factor of the present application may be directly indicated, or different indices may correspond to different values of the scale factor and the offset factor, that is, the index corresponding to the scale factor and the offset factor is indicated in the frequency indication information.

It can be understood that since the frequency indication information of the present application includes the scale factor of the third frequency relative to the fifth frequency or the offset factor of the third frequency relative to the fifth frequency, the corresponding third frequency can be obtained according to the scale factor of the third frequency relative to the fifth frequency or the offset factor of the third frequency relative to the fifth frequency.

It should be noted that the fifth frequency of the present application is a pre-configured value, or is determined according to a length of a calibration signal carried by the first FL signal.

It can be understood that the fifth frequency of the present application may be a pre-configured value, or may be determined according to the length of the calibration signal carried by the first FL signal. The embodiments of the present application do not specifically limit the determination of the fifth frequency.

Illustratively, the fifth frequency is determined according to the length of the calibration signal carried by the first FL signal. When the length of the calibration signal carried by the first FL signal is T, the fifth frequency is 1/T or a multiple of 1/T.

It should be noted that the first FL signal is a modulated signal carrying information; and the second FL signal is an unmodulated signal.

It can be understood that the first FL signal of the present application is a modulated signal carrying information, and may be a start symbol, a preamble, a delimiter, a synchronization signal, a calibration signal, signaling, a control signal, a data signal, a check signal, or an end symbol. The present application does not specifically limit the type of the first FL signal.

It can be understood that the second FL signal of the present application is an unmodulated signal, and may be a Continuous Waveform (CW) that does not contain information, a sine wave, or a cosine wave. The embodiments of the present application do not specifically limit the type of the second FL signal.

It should be noted that the CW may provide radio frequency energy for the Tag, and the CW may also provide a carrier for the RL signal transmitted by the Tag, for example, the Tag modulates and reflects the CW to generate the RL signal.

It should be noted that the RL signal of the present application is a modulated signal carrying information.

It can be understood that the RL signal of the present application is a modulated signal carrying information, and may be a start symbol, a preamble, a delimiter, a control signal, a data signal, a check signal, or an end symbol. The embodiments of the present application do not specifically limit the type of the RL signal.

Illustratively, the CW is modulated to carry information transmitted to the Reader. During the modulation process, the fourth frequency used by the RL signal is determined by the third frequency and the second frequency used by the CW. Therefore, after the third frequency is obtained, the corresponding fourth frequency can be obtained through the second frequency.

Specifically, in a possible embodiment, prior to the above-mentioned step S110, the method may include, but is not limited to, step S100.

In step S100, frequency configuration information corresponding to a present node is obtained, wherein the frequency configuration information is used to determine at least one of the first frequency, the second frequency, or the RL frequency.

It can be understood that when the frequency configuration information corresponding to the present node is obtained, at least one of the corresponding first frequency, second frequency, or RL frequency can be obtained through the frequency configuration information.

Illustratively, when the first node is a terminal node, the central node corresponding to the terminal node can transmit the frequency configuration information, and determine at least one of the first frequency, the second frequency, or the RL frequency according to the frequency configuration information. When the first node is a central node, the frequency configuration information may be obtained from the network side, so as to determine at least one of the first frequency, the second frequency, or the RL frequency according to the frequency configuration information.

Specifically, in a possible embodiment, the first node is any one master node in a network, and after the above-mentioned step S100, the method may include, but is not limited to, step S140.

In step S140, the frequency configuration information corresponding to the present node is announced to other master nodes in the network.

It should be noted that the first node of the present application is any one master node in the network, and the first node can announce the frequency configuration information corresponding to the present node to other master nodes in the network. For example, in order to avoid mutual interference between a plurality of Readers, the Reader may notify other Readers of its own frequency configuration information used. Alternatively, in order to avoid interference between A-IoT communication and traditional communication, the Reader may also notify traditional communication nodes of the frequency configuration information used by A-IoT to avoid mutual interference.

In addition, it should be noted that when the first node is a central node, the first frequency is at least located in a downlink spectrum, the second frequency is at least located in an uplink spectrum, and the RL frequency is at least located in the uplink spectrum; or the first frequency is at least located in the downlink spectrum, the second frequency is located in a spectrum between the uplink spectrum and the downlink spectrum, and the RL frequency is at least located in the uplink spectrum; or the first frequency is at least located in the downlink spectrum, the second frequency is located in the spectrum between the uplink spectrum and the downlink spectrum, and the RL frequency is located in the spectrum between the uplink spectrum and the downlink spectrum; or the first frequency is at least located in the downlink spectrum, the second frequency is located in the uplink spectrum, and the RL frequency is at least located in the spectrum between the uplink spectrum and the downlink spectrum.

It can be understood that the spectrum allocation scheme of the present application can improve spectrum efficiency, enhance flexibility, promote spectrum sharing, and achieve balance among different communication requirements.

In addition, it should be noted that when the first node is a terminal node, the first frequency is at least located in an uplink spectrum, the second frequency is at least located in a downlink spectrum, and the RL frequency is at least located in the downlink spectrum; or the first frequency is at least located in the uplink spectrum, the second frequency is located in a spectrum between the uplink spectrum and the downlink spectrum, and the RL frequency is at least located in the downlink spectrum; or the first frequency is at least located in the uplink spectrum, the second frequency is located in the spectrum between the uplink spectrum and the downlink spectrum, and the RL frequency is located in the spectrum between the uplink spectrum and the downlink spectrum; or the first frequency is at least located in the uplink spectrum, the second frequency is located in the downlink spectrum, and the RL frequency is at least located in the spectrum between the uplink spectrum and the downlink spectrum.

It can be understood that the spectrum allocation scheme of the present application can improve spectrum efficiency, enhance flexibility, promote spectrum sharing, and achieve balance among different communication requirements.

It should be noted that the above-mentioned uplink spectrum and downlink spectrum are paired spectra in Frequency Division Duplex (FDD) communication; being located in the uplink spectrum represents being located in a guard band of the uplink spectrum; and being located in the downlink spectrum represents being located in a guard band of the downlink spectrum.

Illustratively, since UL or DL communication may also exist on the uplink or downlink spectrum, in order to avoid mutual influence with A-IoT communication, the FL or RL signal may be at least located on the guard band of the uplink or downlink spectrum of FDD.

It can be understood that the guard band is generally located at the edge of the uplink or downlink spectrum or at the edge of a carrier in the uplink or downlink spectrum.

It can be understood that the FL or RL signal may also occupy the spectrum originally used for traditional communication. However, in order to avoid mutual interference between the FL or RL signal and the DL/UL signal of traditional communication, generally, no traditional communication signal is expected within the operating spectrum range of A-IoT.

It can be understood that if subband FDD is used, the FL or RL signal may be at least located on the guard bands of the uplink subband and the downlink subband.

It should be noted that the first frequency, the second frequency, and the RL frequency are located in a same spectrum.

It can be understood that since the first frequency, the second frequency, and the RL frequency are located in the same spectrum, spectrum resources can be more effectively shared, thereby improving the utilization efficiency of the spectrum. In addition, deploying a plurality of frequencies in the same spectrum can increase the communication capacity of the system, thereby supporting more data transmission and communication requirements. Furthermore, by utilizing a plurality of frequencies in the same spectrum, higher data transmission rates can be achieved, meeting the demand for high-speed data transmission.

In addition, it should be noted that A-IoT communication may utilize not only paired spectra, but also operate on Non-Paired Spectrum (NPS), for example, operating on a single spectrum, which may be a TDD spectrum, an unlicensed spectrum, or an uplink spectrum or a downlink spectrum of the paired spectra. That is, the first frequency, the second frequency, and the RL frequency are all on the same spectrum. Therefore, the present application can better adapt to different spectrum environments and application requirements, providing more efficient, reliable, and low-latency communication connections for communication devices.

Referring to FIG. 2, FIG. 2 is a schematic flowchart of a communication method provided by another embodiment of the present application. The communication method is applied to a second node. As shown in FIG. 2, the communication method may include, but is not limited to, the following steps S210 to S240, which will be introduced in sequence below:
In step S210, a first forward link (FL) signal transmitted at a first frequency is received, wherein the first FL signal carries frequency indication information;
In step S220, a second FL signal transmitted at a second frequency is received;
In step S230, a return link (RL) frequency is determined according to at least one of the frequency indication information and the second frequency;
In step S240, an RL signal is transmitted at the RL frequency.

It should be noted that, first, the present application receives the first forward link (FL) signal transmitted at the first frequency, wherein the first FL signal carries the frequency indication information; next, the present application receives the second FL signal transmitted at the second frequency; then, the present application determines the return link (RL) frequency according to at least one of the frequency indication information and the second frequency; finally, the RL signal is transmitted at the RL frequency.

It is worth noting that the present application addresses the problem of determining the communication frequency of devices in ambient IoT communication scenarios by obtaining the RL frequency according to at least one of the frequency indication information carried by the first FL signal and the second frequency, and receiving the RL signal transmitted by the second node based on the RL frequency, thereby implementing duplex communication.

It can be understood that the RL frequency of the present application may be determined according to the frequency indication information, may be determined according to the second frequency, or may be determined according to the frequency indication information and the second frequency. The embodiments of the present application do not specifically limit this.

In a possible embodiment, the RL frequency of the present application includes a third frequency, and regarding the above-mentioned step S230, the method may include, but is not limited to, step S250.

In step S250, the third frequency is determined according to the frequency indication information.

It can be understood that since the first FL signal of the present application carries the frequency indication information, and the frequency indication information is configured to be used for determining the third frequency, the third frequency can be determined through the frequency indication information.

In a possible embodiment, the RL frequency of the present application includes a third frequency and a fourth frequency, and regarding the above-mentioned step S230, the method may include, but is not limited to, step S260 and step S270.

In step S260, the third frequency is determined according to the frequency indication information;

In step S270, the fourth frequency is obtained by offsetting the second frequency by the third frequency.

It can be understood that after the third frequency is determined according to the frequency indication information carried by the first FL signal in the present application, the fourth frequency is obtained by offsetting the second frequency by the third frequency.

Illustratively, based on the second frequency of the detected second FL signal, the second node performs an offset by the third frequency, i.e., adds or subtracts the third frequency, thereby obtaining the fourth frequency.

It should be noted that the frequency indication information includes one of the following:
a value of the third frequency; or an index of the third frequency.

It can be understood that since the frequency indication information of the present application includes the value of the third frequency or the index of the third frequency, the corresponding third frequency can be confirmed according to the value of the third frequency or the index of the third frequency.

It should be noted that the basic time-domain period of the RL signal of the present application may be the reciprocal of the RL frequency, or the reciprocal of the third frequency. The present application does not specifically limit the basic time-domain period of the RL signal.

In addition, it should be noted that the frequency indication information includes one of the following:
a scale factor of the third frequency relative to a fifth frequency; or an offset factor of the third frequency relative to the fifth frequency.

It can be understood that the scale factor and the offset factor of the present application may be directly indicated, or different indices may correspond to different values of the scale factor and the offset factor, that is, the index corresponding to the third frequency is indicated in the frequency indication information.

It can be understood that since the frequency indication information of the present application includes the scale factor of the third frequency relative to the fifth frequency or the offset factor of the third frequency relative to the fifth frequency, the corresponding third frequency can be obtained according to the scale factor of the third frequency relative to the fifth frequency or the offset factor of the third frequency relative to the fifth frequency.

It should be noted that the fifth frequency of the present application is a pre-configured value, or is determined according to the length of the calibration signal carried by the first FL signal.

It can be understood that the fifth frequency of the present application may be a pre-configured value, or may be determined according to the length of the calibration signal carried by the first FL signal. The embodiments of the present application do not specifically limit the determination of the fifth frequency.

Illustratively, the fifth frequency is determined according to the length of the calibration signal carried by the first FL signal. When the length of the calibration signal carried by the first FL signal is T, the fifth frequency is 1/T or a multiple of 1/T.

It should be noted that the first FL signal is a modulated signal carrying information; and the second FL signal is an unmodulated signal.

It can be understood that the first FL signal of the present application is a modulated signal carrying information, and may be a start symbol, a preamble, a delimiter, a synchronization signal, a calibration signal, signaling, a control signal, a data signal, a check signal, or an end symbol. The present application does not specifically limit the type of the first FL signal.

It can be understood that the second FL signal of the present application is an unmodulated signal, and may be a Continuous Waveform (CW) that does not contain information, a sine wave, or a cosine wave. The embodiments of the present application do not specifically limit the type of the second FL signal.

It should be noted that the CW may provide radio frequency energy for the Tag, and the CW may also provide a carrier for the RL signal transmitted by the Tag, for example, the Tag modulates and reflects the CW to generate the RL signal.

It should be noted that the RL signal of the present application is a modulated signal carrying information.

It can be understood that the RL signal of the present application is a modulated signal carrying information, and may be a start symbol, a preamble, a delimiter, a control signal, a data signal, a check signal, or an end symbol. The embodiments of the present application do not specifically limit the type of the RL signal.

Illustratively, the CW is modulated to carry information transmitted to the Reader. During the modulation process, the fourth frequency used by the RL signal is determined by the third frequency and the second frequency used by the CW. Therefore, after the third frequency is obtained, the corresponding fourth frequency can be obtained through the second frequency.

It should be noted that the RL frequency may also be equal to the second frequency, for example, the center frequency point of the return signal is the same as the center frequency point of the CW; this may also be understood as the third frequency being 0 and the fourth frequency being equal to the second frequency.

In addition, it should be noted that when the second node is a terminal node, the first frequency is at least located in a downlink spectrum, the second frequency is at least located in an uplink spectrum, and the RL frequency is at least located in the uplink spectrum; or the first frequency is at least located in the downlink spectrum, the second frequency is located in a spectrum between the uplink spectrum and the downlink spectrum, and the RL frequency is at least located in the uplink spectrum; or the first frequency is at least located in the downlink spectrum, the second frequency is located in the spectrum between the uplink spectrum and the downlink spectrum, and the RL frequency is located in the spectrum between the uplink spectrum and the downlink spectrum; or the first frequency is at least located in the downlink spectrum, the second frequency is located in the uplink spectrum, and the RL frequency is at least located in the spectrum between the uplink spectrum and the downlink spectrum.

It can be understood that the spectrum allocation scheme of the present application can improve spectrum efficiency, enhance flexibility, promote spectrum sharing, and achieve balance among different communication requirements.

In addition, it should be noted that when the second node is a central node, the first frequency is at least located in an uplink spectrum, the second frequency is at least located in a downlink spectrum, and the RL frequency is at least located in the downlink spectrum; or the first frequency is at least located in the uplink spectrum, the second frequency is located in a spectrum between the uplink spectrum and the downlink spectrum, and the RL frequency is at least located in the downlink spectrum; or the first frequency is at least located in the uplink spectrum, the second frequency is located in the spectrum between the uplink spectrum and the downlink spectrum, and the RL frequency is located in the spectrum between the uplink spectrum and the downlink spectrum; or the first frequency is at least located in the uplink spectrum, the second frequency is located in the downlink spectrum, and the RL frequency is at least located in the spectrum between the uplink spectrum and the downlink spectrum.

It can be understood that the spectrum allocation scheme of the present application can improve spectrum efficiency, enhance flexibility, promote spectrum sharing, and achieve balance among different communication requirements.

It should be noted that the above-mentioned uplink spectrum and downlink spectrum are paired spectra in Frequency Division Duplex (FDD) communication; being located in the uplink spectrum represents being located in a guard band of the uplink spectrum; and being located in the downlink spectrum represents being located in a guard band of the downlink spectrum.

Illustratively, since UL or DL communication may also exist on the uplink or downlink spectrum, in order to avoid mutual influence with A-IoT communication, the FL or RL signal may be at least located on the guard band of the uplink or downlink spectrum of FDD.

It should be noted that the first frequency, the second frequency, and the RL frequency are located in a same spectrum.

It can be understood that since the first frequency, the second frequency, and the RL frequency are located in the same spectrum, spectrum resources can be more effectively shared, thereby improving the utilization efficiency of the spectrum. In addition, deploying a plurality of frequencies in the same spectrum can increase the communication capacity of the system, thereby supporting more data transmission and communication requirements. Furthermore, by utilizing a plurality of frequencies in the same spectrum, higher data transmission rates can be achieved, meeting the demand for high-speed data transmission.

In addition, it should be noted that A-IoT communication may utilize not only paired spectra, but also operate on non-paired spectrum, for example, operating on a single spectrum, which may be a TDD spectrum, an unlicensed spectrum, or an uplink spectrum or a downlink spectrum of the paired spectra. That is, the first frequency, the second frequency, and the RL frequency are all on the same spectrum. Therefore, the present application can better adapt to different spectrum environments and application requirements, providing more efficient, reliable, and low-latency communication connections for communication devices.

### Example 1:

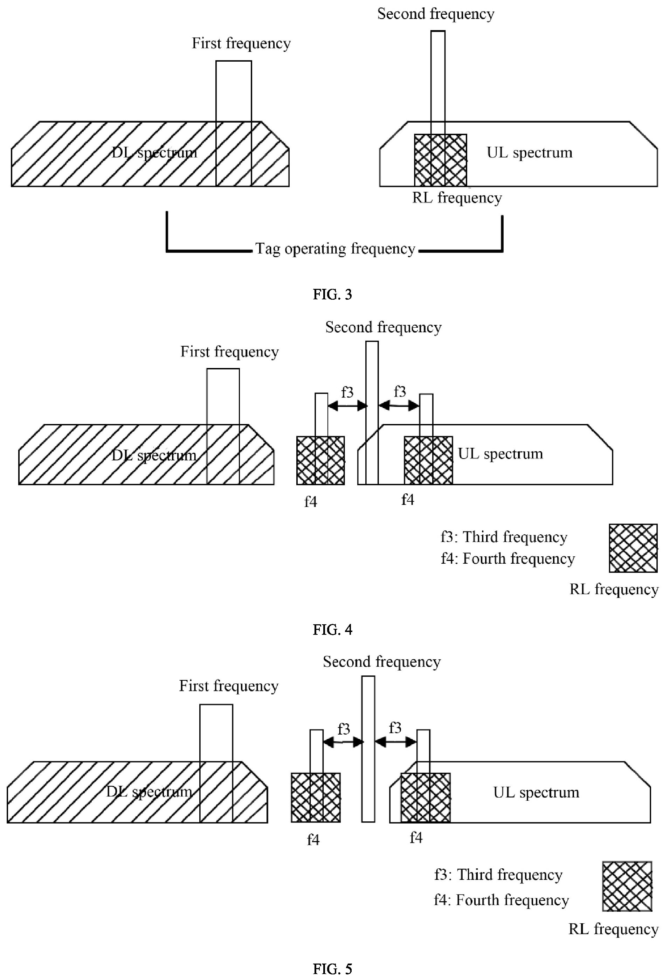

As shown in FIG. 3, in the present application, taking the central node acting as the Reader as an example, for example, a base station operating on a paired spectrum uses the frequencies for A-IoT communication as shown in FIG. 3.

It should be noted that the frequency in the present application may refer to a frequency point or a frequency value, or may refer to a frequency range. For example, it may refer to a center frequency point of a frequency range, or may refer to the frequency range itself. When the first frequency or the RL frequency carries useful information, it is a frequency range; the third frequency is a frequency value; and when the second frequency does not modulate useful information, it is a frequency point with a very narrow frequency; and so on.

When the base station acts as the Reader, in order to be as compatible as possible with traditional communication, when A-IoT communication needs to be transmitted to the Tag, the DL spectrum is still used, and when the return link communication of the Tag needs to be received, the UL spectrum is still used. Compared with traditional communication, the biggest difference is that the base station needs to transmit the second FL signal on the UL spectrum for the return link communication of the Tag. The Tag, using the second FL signal to perform return link communication, transmits information to the Reader at the RL frequency.

For the Tag, its operating frequency is a frequency range, which may be as shown in FIG. 3. Generally, the frequency used for FL and the frequency used for RL are both located within the operating frequency of the Tag. That is, the operating frequency of the Tag at least includes the frequency used for FL and the frequency used for RL.

Through the frequency indication information, the first frequency used by the first FL signal may be placed in the DL spectrum, the second FL signal may be placed in the UL spectrum, and the RL frequency may also be configured within the UL spectrum range, that is, the first frequency is located in the downlink spectrum; the second frequency is located in the uplink spectrum; and the RL frequency is located in the uplink spectrum. Therefore, there is no full duplex interference problem in each frequency band on the Reader side. The base station transmits the modulated first FL signal and the DL signal only on the DL spectrum, while the RL frequency and the UL reception are on the UL spectrum. Only the second FL signal is transmitted on the UL spectrum, and the bandwidth of the second FL signal is very narrow and does not carry information, so the interference of the second FL signal can be easily cancelled. That is, the problem of Mode 1 is solved. In addition, the Tag does not need to perform cross-band spectrum shifting, which is relatively simple, i.e., there is no problem of Mode 2.

In the present application, when the terminal node acts as the Reader, it can also follow the A-IoT communication frequencies as shown in FIG. 3. That is, the first frequency is located in the uplink spectrum; the second frequency is located in the downlink spectrum; and the RL frequency is also located in the downlink spectrum.

When the base station and the UE communicate as the Reader and the Tag, at the same time, the first frequency for the base station Reader is defined on the DL spectrum, and another first frequency for the UE-type Reader is defined on the UL spectrum; the second frequency and the RL frequency for the base station are defined on the UL spectrum, and the second frequency and the RL frequency for the UE are defined on the DL spectrum.

### Example 2:

In the present application, determining the RL frequency further includes determining the third frequency f3. The third frequency may be considered as a baseband or basic frequency of the RL signal, or may be considered as an offset frequency or a subcarrier relative to the second frequency. Generally, a basic time-domain period of the RL signal is 1/f3. The third frequency and the RL frequency may also be considered as equivalent. The Reader may transmit frequency indication information about the third frequency in the transmitted modulated first FL signal, for example, directly indicating the value of the third frequency, or the index corresponding to the third frequency, or indicating a scale factor a of the third frequency relative to the fifth frequency (for example, a times the fifth frequency is the third frequency), or a frequency offset factor b (for example, offsetting the fifth frequency by b yields the third frequency).

It should be noted that the above-mentioned values of a or b may also be indicated in the modulated first FL signal, either by directly indicating the values, or by having different indices correspond to different values of a and b, and indicating the corresponding index in the frequency indication information. The fifth frequency is a pre-configured value, or the fifth frequency is determined by the length T of the calibration signal carried by the first FL signal. For example, the fifth frequency is 1/T or a multiple of 1/T. For example, a modulated signal with a length of 25 µs is transmitted in the modulated first FL signal as the calibration signal. The Tag can then obtain the corresponding fifth frequency of 40 KHz, i.e., 1/(25 µs), by measuring the calibration signal. If the value of the scale factor a indicated by the modulated first FL signal is 4, then the third frequency is 160 KHz. Alternatively, if an index corresponding to a is indicated, for example, index 1 represents a=3/2, then if index 1 is indicated, this represents that the third frequency is 60 KHz.

It should be noted that the third frequency is used to generate the corresponding basic or baseband waveform of the RL communication, and the second FL signal is modulated with the baseband waveform and reflected to generate the radio frequency waveform of the RL communication propagating in space. The RL frequency may further include the fourth frequency f4. If the second frequency is denoted as f2, then f4 is a frequency point of the radio frequency waveform of the RL communication, and the relationship between them is f4=f2±f3. The frequency range of the RL communication is located around the fourth frequency, that is, it is equivalent to using a subcarrier of the third frequency to shift the frequency used by the RL communication away from the second frequency of the second FL signal, avoiding mutual interference.

### Example 3:

As shown in FIG. 4, in the present application, the RL frequency may be located in the DL or UL spectrum, or may be located in the spectrum between the DL spectrum and the UL spectrum. Generally, there is a gap of a certain bandwidth between the UL spectrum and the DL spectrum of FDD to avoid self-interference of full duplex, and the frequencies within the gap may be unlicensed spectrum, license-exempt spectrum, or dedicated spectrum. If the energy of the RL communication of the Tag is small and satisfies the usage rules of the spectrum within the gap, a portion of the RL frequency may also be located within the gap. Taking the base station as the Reader as an example, the RL frequency may be located in the UL spectrum and the gap spectrum.

It can be understood that when the UE acts as the Reader, the RL frequency may be located in the DL spectrum and the gap spectrum.

It can be understood that when the Tag can transmit the RL signal using one sideband, only one sideband may be transmitted. As shown in FIG. 4, only the RL frequency corresponding to f4 on the right side of the second frequency may be transmitted, i.e., transmitted only on the UL spectrum, or only the RL frequency of the left sideband may be transmitted, i.e., transmitted only in the gap.

It can be understood that the Reader may also notify the Tag through the frequency indication information, indicating at least one of the following information: whether to transmit only one sideband; and which sideband to transmit or filter out.

### Example 4:

As shown in FIG. 5, in the present application, the second frequency may also be transmitted within the gap, while the RL frequency is at least transmitted in the DL or UL spectrum, and may also be located in the spectrum between the DL spectrum and the UL spectrum. If the second FL signal transmitted by the Reader and the RL signal reflected by the Tag satisfy the usage rules of the spectrum within the gap, portions of the second frequency and the RL frequency may also be located within the gap. Taking the base station as the Reader as an example, the second frequency may be transmitted within the gap, and the RL frequency may be located in the UL spectrum and the gap spectrum.

It can be understood that when the UE acts as the Reader, the second frequency may be located within the gap, and the RL frequency may be located in the DL spectrum and the gap spectrum.

It can be understood that when the Tag can transmit the RL signal using one sideband, only one sideband may be transmitted. For example, the RL signal is transmitted only in the DL spectrum, the UL spectrum, or the gap spectrum.

### Example 5:

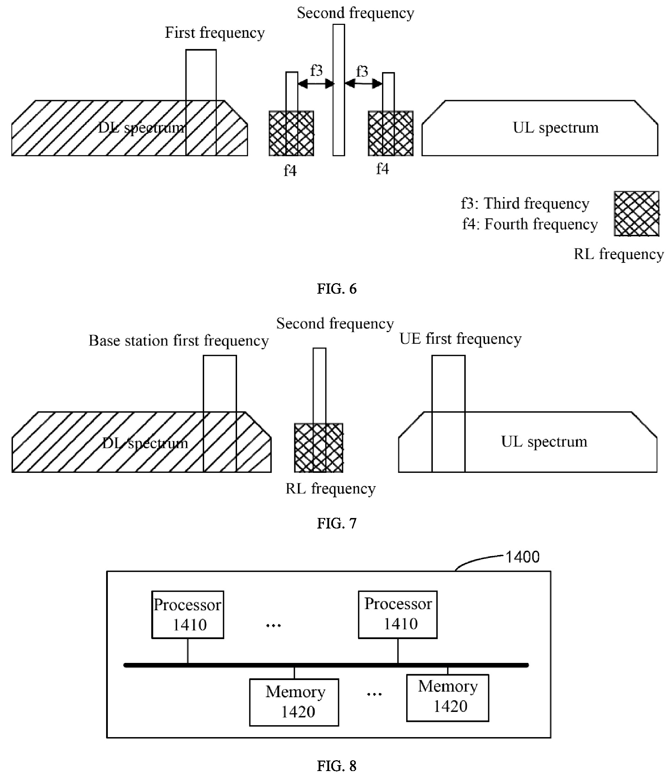

As shown in FIG. 6, in the present application, both the second frequency and the RL frequency may be located within the gap, while the frequency of the first FL signal is located in the DL or UL spectrum. If the second FL signal transmitted by the Reader and the RL signal reflected by the Tag satisfy the usage rules of the spectrum within the gap, both the second frequency and the RL frequency may be located within the gap. Taking the base station as the Reader as an example, both the second frequency and the RL frequency may be located within the gap, and the first frequency may be located in the DL frequency.

It can be understood that when the UE acts as the Reader, the second FL signal transmitted by the UE and the RL signal transmitted by the Tag may be located within the gap, and the first FL signal may be located in the UL spectrum.

As shown in FIG. 7, when the base station and the UE communicate as the Reader and the Tag, the second frequencies and the RL frequencies respectively corresponding to the base-station-type Reader and the UE-type Reader may be different or the same. For example, the base-station-type Reader and the UE-type Reader may use the same second frequency and different RL frequencies. Alternatively, both the second frequency and the RL frequency may be the same.

### Example 6:

The Reader of the present application may be divided into a plurality of entities. For example, the function of transmitting the second FL signal may be a separate entity, and the function of transmitting the first FL signal and receiving the RL signal may be another entity, so as to avoid the interference problem caused by the Reader receiving the RL signal while transmitting the second FL signal.

In the present application, an FL frequency range, for example, an FL Bandwidth Part (BWP), may be configured for determining the first frequency used by the first FL signal transmitted by the Reader.

It can be understood that for the Reader, the first frequency may be configured as a center frequency point, a start frequency point, or an end frequency point. Optionally, the bandwidth of the first frequency may also be configured.

In the present application, an RL frequency range, for example, an RL BWP, may be configured, wherein the second frequency of the second FL signal transmitted by the Reader, and the RL frequency of the Tag, are both within the RL BWP.

It can be understood that for the Reader, the RL frequency may also be directly configured as a frequency point, for example, a center frequency point, a start frequency point, an end frequency point, or a frequency point offset by a certain bandwidth relative to the start frequency point. In a special case, the second frequency may be equal to the configured frequency point. Optionally, the bandwidth of the RL frequency may also be configured.

In the present application, an A-IoT frequency range may also be configured, for example, an A-loT carrier or BWP, which may be understood as the operating frequency range of the Tag, and may at least include the RL frequency range and the FL frequency range.

It should be noted that the configuration herein may include configuration performed by the Reader, a network entity, a higher layer, a central node, or a terminal node transmitting configuration or indication information, and may also include pre-configuration on the network side, pre-definition by a protocol, and configuration according to a certain pre-defined rule.

It can be understood that, regarding the above, the Reader may be the first node, and the Tag may be the second node.

An embodiment of the present application further provides an electronic device. As shown in FIG. 8, the electronic device 1400 includes:
one or more processors 1410;
a memory 1420 storing one or more programs, wherein when the one or more programs are executed by the one or more processors 1410, the one or more processors 1410 are caused to implement:
   the communication method as applied to the first node; or
   the communication method as applied to the second node.

The memory 1420, as a non-transitory network system, may be used to store non-transitory software programs and non-transitory computer-executable programs. In addition, the memory 1420 may include a high-speed random access memory, and may also include a non-transitory memory, for example, at least one magnetic disk storage device, a flash memory device, or other non-transitory solid-state storage devices. In some embodiments, the memory 1420 may optionally include memories 1420 remotely arranged relative to the processor 1410, and these remote memories 1420 may be connected to the processor 1410 through a network. Examples of the above-mentioned network include, but are not limited to, the Internet, an intranet, a local area network, a mobile communication network, and combinations thereof.

The memory 1420 may be implemented in the form of Read Only Memory (ROM), a static storage device, a dynamic storage device, or Random Access Memory (RAM), and the like. The memory 1420 may store an operating system and other application programs. When the technical solutions provided by the embodiments of the present specification are implemented through software or firmware, related program codes are stored in the memory 1420, and are invoked by the processor 1410 to execute the methods of the embodiments of the present application.

The processor 1410 may be implemented in the form of a general-purpose Central Processing Unit (CPU), a microprocessor, an Application Specific Integrated Circuit (ASIC), or one or more integrated circuits, and the like, for executing related programs to implement the technical solutions provided by the embodiments of the present application.

In some embodiments, the electronic device further includes:
an input/output interface, configured to implement input and output of information;
a communication interface, configured to implement communication interaction between the present device and other devices, and capable of implementing communication in a wired manner (for example, USB, network cable, etc.) or in a wireless manner (for example, mobile network, WIFI, Bluetooth, etc.);
a bus, configured to transmit information between the various components of the device (for example, the processor 1410, the memory 1420, the input/output interface, and the communication interface);
wherein the processor 1410, the memory 1420, the input/output interface, and the communication interface may implement communication connections with each other within the device through the bus.

An embodiment of the present application further provides a computer-readable storage medium storing computer-executable instructions, wherein the computer-executable instructions are used to execute and implement:
the communication method as applied to the first node; or
the communication method as applied to the second node.

An embodiment of the present application further provides a computer program product, including a computer program or computer instructions, wherein the computer program or the computer instructions are stored in a computer-readable storage medium, a processor of a computer device reads the computer program or the computer instructions from the computer-readable storage medium, and the processor executes the computer program or the computer instructions, so that the computer device is caused to execute and implement:
the communication method as applied to the first node; or
the communication method as applied to the second node.

The system architecture and the application scenarios described in the embodiments of the present application are intended to more clearly illustrate the technical solutions of the embodiments of the present application, and do not constitute a limitation on the technical solutions provided by the embodiments of the present application. Those skilled in the art can appreciate that, with the evolution of system architectures and the emergence of new application scenarios, the technical solutions provided by the embodiments of the present application are equally applicable to similar technical problems.

Those of ordinary skill in the art can appreciate that all or part of the processes in the methods of the above-mentioned embodiments may be implemented by a computer program instructing related hardware. The computer program may be stored in a non-volatile computer-readable storage medium, and when executed, the computer program may include the processes of the embodiments of the various methods described above. Any reference to a memory, storage, a database, or other medium used in the various embodiments provided by the present application may include non-volatile and/or volatile memory. Non-volatile memory may include Read-Only Memory (ROM), Programmable ROM (PROM), Electrically Programmable ROM (EPROM), Electrically Erasable Programmable ROM (EEPROM), or flash memory. Volatile memory may include Random Access Memory (RAM) or external cache memory. By way of illustration and not limitation, RAM is available in various forms, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Rambus Direct RAM (RDRAM), Direct Rambus Dynamic RAM (DRDRAM), and Rambus Dynamic RAM (RDRAM), and the like.

Those of ordinary skill in the art can appreciate that all or some steps or systems in the methods disclosed above may be implemented as software, firmware, hardware, or any appropriate combination thereof. Certain physical components or all physical components may be implemented as software executed by a processor, such as a central processing unit, a digital signal processor, or a microprocessor, or may be implemented as hardware, or may be implemented as an integrated circuit, such as an application-specific integrated circuit. Such software may be distributed on computer-readable media, which may include computer storage media (or non-transitory media) and communication media (or transitory media). As is well known to those of ordinary skill in the art, the term "computer storage medium" includes volatile and non-volatile, removable and non-removable media implemented in any method or technology for storing information (such as computer-readable instructions, data structures, program modules, or other data). Computer storage media include, but are not limited to, RAM, ROM, EEPROM, flash memory or other memory technologies, CD-ROM, Digital Versatile Disks (DVD) or other optical disk storage, magnetic cassettes, magnetic tapes, magnetic disk storage or other magnetic storage devices, or any other medium that can be used to store desired information and that can be accessed by a computer. In addition, it is well known to those of ordinary skill in the art that communication media generally include computer-readable instructions, data structures, program modules, or other data in a modulated data signal, such as a carrier wave or other transport mechanism, and may include any information delivery medium.

Some embodiments of the present application have been described above with reference to the accompanying drawings, but this does not thereby limit the scope of the rights of the present application. Any modifications, equivalent replacements, and improvements made by those skilled in the art without departing from the scope and essence of the present application shall fall within the scope of the rights of the present application.

## Claims

1. A communication method, applied to a first node, comprising:
transmitting a first forward link (FL) signal at a first frequency;
transmitting a second FL signal at a second frequency; and
receiving, based on a return link (RL) frequency, an RL signal transmitted by a second node;
wherein the first FL signal carries frequency indication information, and the RL frequency is determined according to at least one of the frequency indication information and the second frequency.

2. The method according to claim 1, wherein the RL frequency comprises a third frequency, and the frequency indication information is configured to be used for determining the third frequency.

3. The method according to claim 2, wherein the RL frequency further comprises a fourth frequency, and the fourth frequency is obtained by offsetting the second frequency by the third frequency.

4. The method according to claim 2 or 3, wherein the frequency indication information comprises one of the following:
a value of the third frequency;
or
an index of the third frequency.

5. The method according to claim 2 or 3, wherein the frequency indication information comprises one of the following:
a scale factor of the third frequency relative to a fifth frequency;
or
an offset factor of the third frequency relative to the fifth frequency.

6. The method according to claim 5, wherein the fifth frequency is a pre-configured value; or the fifth frequency is determined according to a length of a calibration signal carried by the first FL signal.

7. The method according to claim 1, wherein the first FL signal is a modulated signal carrying information; and the second FL signal is an unmodulated signal.

8. The method according to claim 1 or 7, wherein the RL signal is a modulated signal carrying information.

9. The method according to claim 1, wherein prior to transmitting the first forward link (FL) signal at the first frequency, the method further comprises:
obtaining frequency configuration information corresponding to a present node, wherein the frequency configuration information is used to determine at least one of the first frequency, the second frequency, or the RL frequency.

10. The method according to claim 9, wherein the first node is any one master node in a network, and after obtaining the frequency configuration information, the method further comprises:
announcing, to other master nodes in the network, the frequency configuration information corresponding to the present node.

11. The method according to claim 1, wherein the first node is a central node;
the first frequency is at least located in a downlink spectrum, the second frequency is at least located in an uplink spectrum, and the RL frequency is at least located in the uplink spectrum;
or
the first frequency is at least located in the downlink spectrum, the second frequency is located in a spectrum between the uplink spectrum and the downlink spectrum, and the RL frequency is at least located in the uplink spectrum;
or
the first frequency is at least located in the downlink spectrum, the second frequency is located in the spectrum between the uplink spectrum and the downlink spectrum, and the RL frequency is located in the spectrum between the uplink spectrum and the downlink spectrum;
or
the first frequency is at least located in the downlink spectrum, the second frequency is located in the uplink spectrum, and the RL frequency is at least located in the spectrum between the uplink spectrum and the downlink spectrum.

12. The method according to claim 1, wherein the first node is a terminal node;
the first frequency is at least located in an uplink spectrum, the second frequency is at least located in a downlink spectrum, and the RL frequency is at least located in the downlink spectrum;
or
the first frequency is at least located in the uplink spectrum, the second frequency is located in a spectrum between the uplink spectrum and the downlink spectrum, and the RL frequency is at least located in the downlink spectrum;
or
the first frequency is at least located in the uplink spectrum, the second frequency is located in the spectrum between the uplink spectrum and the downlink spectrum, and the RL frequency is located in the spectrum between the uplink spectrum and the downlink spectrum;
or
the first frequency is at least located in the uplink spectrum, the second frequency is located in the downlink spectrum, and the RL frequency is at least located in the spectrum between the uplink spectrum and the downlink spectrum.

13. The method according to claim 11 or 12, wherein the uplink spectrum and the downlink spectrum are paired spectra in frequency division duplex (FDD) communication; being located in the uplink spectrum represents being located in a guard band of the uplink spectrum; and being located in the downlink spectrum represents being located in a guard band of the downlink spectrum.

14. The method according to claim 1, wherein the first frequency, the second frequency, and the RL frequency are located in a same spectrum.

15. A communication method, applied to a second node, comprising:
receiving a first forward link (FL) signal transmitted at a first frequency, wherein the first FL signal carries frequency indication information;
receiving a second FL signal transmitted at a second frequency;
determining a return link (RL) frequency according to at least one of the frequency indication information and the second frequency;
transmitting an RL signal at the RL frequency.

16. The method according to claim 15, wherein the RL frequency comprises a third frequency, and the determining the return link (RL) frequency according to at least one of the frequency indication information and the second frequency comprises:
determining the third frequency according to the frequency indication information.

17. The method according to claim 15, wherein the RL frequency comprises a third frequency and a fourth frequency, and the determining the return link (RL) frequency according to at least one of the frequency indication information and the second frequency comprises:
determining the third frequency according to the frequency indication information;
obtaining the fourth frequency by offsetting the second frequency by the third frequency.

18. The method according to claim 16 or 17, wherein the frequency indication information comprises one of the following:
a value of the third frequency;
or
an index of the third frequency.

19. The method according to claim 16 or 17, wherein the frequency indication information comprises one of the following:
a scale factor of the third frequency relative to a fifth frequency;
or
an offset factor of the third frequency relative to the fifth frequency.

20. The method according to claim 19, wherein the fifth frequency is a pre-configured value; or the fifth frequency is determined according to a length of a calibration signal carried by the first FL signal.

21. The method according to claim 15, wherein the first FL signal is a modulated signal carrying information; and the second FL signal is an unmodulated signal.

22. The method according to claim 15 or 21, wherein the RL signal is a modulated signal carrying information.

23. The method according to claim 15, wherein the second node is a terminal node;
the first frequency is at least located in a downlink spectrum, the second frequency is at least located in an uplink spectrum, and the RL frequency is at least located in the uplink spectrum;
or
the first frequency is at least located in the downlink spectrum, the second frequency is located in a spectrum between the uplink spectrum and the downlink spectrum, and the RL frequency is at least located in the uplink spectrum;
or
the first frequency is at least located in the downlink spectrum, the second frequency is located in the spectrum between the uplink spectrum and the downlink spectrum, and the RL frequency is located in the spectrum between the uplink spectrum and the downlink spectrum;
or
the first frequency is at least located in the downlink spectrum, the second frequency is located in the uplink spectrum, and the RL frequency is at least located in the spectrum between the uplink spectrum and the downlink spectrum.

24. The method according to claim 15, wherein the second node is a central node;
the first frequency is at least located in an uplink spectrum, the second frequency is at least located in a downlink spectrum, and the RL frequency is at least located in the downlink spectrum;
or
the first frequency is at least located in the uplink spectrum, the second frequency is located in a spectrum between the uplink spectrum and the downlink spectrum, and the RL frequency is at least located in the downlink spectrum;
or
the first frequency is at least located in the uplink spectrum, the second frequency is located in the spectrum between the uplink spectrum and the downlink spectrum, and the RL frequency is located in the spectrum between the uplink spectrum and the downlink spectrum;
or
the first frequency is at least located in the uplink spectrum, the second frequency is located in the downlink spectrum, and the RL frequency is at least located in the spectrum between the uplink spectrum and the downlink spectrum.

25. The method according to claim 23 or 24, wherein the uplink spectrum and the downlink spectrum are paired spectra in frequency division duplex (FDD) communication; being located in the uplink spectrum represents being located in a guard band of the uplink spectrum; and being located in the downlink spectrum represents being located in a guard band of the downlink spectrum.

26. The method according to claim 15, wherein the first frequency, the second frequency, and the RL frequency are located in a same spectrum.

27. An electronic device, comprising:
one or more processors;
a memory storing one or more computer programs, wherein the one or more computer programs, when executed by the one or more processors, cause the one or more processors to carry out:
the communication method according to any one of claims 1 to 14;
or
the communication method according to any one of claims 15 to 26.

28. A computer-readable storage medium, storing a computer program, wherein the computer program, when executed by a processor, causes the processor to carry out:
the communication method according to any one of claims 1 to 14;
or
the communication method according to any one of claims 15 to 26.

29. A computer program product, comprising a computer program, wherein the computer program, when executed by a processor, causes the processor to carry out:
the communication method according to any one of claims 1 to 14;
or
the communication method according to any one of claims 15 to 26.
